Europäisches Patentamt

European Patent Office

Office européen des brevets

(19)

(11) Veröffentlichungsnummer: **0 248 230 B1**

## EUROPÄISCHE PATENTSCHRIFT

(45) Veröffentlichungstag der Patentschrift: **31.07.91**

(21) Anmeldenummer: **87106631.2**

(22) Anmeldetag: **07.05.87**

(51) Int. Cl.5: **F16K 11/07**, F16K 1/48, F16J 1/12

(54) **Befestigungseinrichtung.**

(30) Priorität: **04.06.86 DE 8615098 U**

(43) Veröffentlichungstag der Anmeldung:
**09.12.87 Patentblatt 87/50**

(45) Bekanntmachung des Hinweises auf die
Patenterteilung:
**31.07.91 Patentblatt 91/31**

(84) Benannte Vertragsstaaten:
**CH DE FR GB IT LI SE**

(56) Entgegenhaltungen:
**DD-A- 216 994      DE-A- 2 501 190**
**DE-A- 2 725 110      DE-U- 1 801 483**
**DE-U- 1 944 159      FR-A- 2 422 847**
**US-A- 4 089 504**

(73) Patentinhaber: **ROBERT BOSCH GMBH**
**Postfach 50**
**W-7000 Stuttgart 1(DE)**

(72) Erfinder: **Frötschl, Erwin**
**Kirchstrasse 22**
**W-7014 Kornwestheim(DE)**
Erfinder: **Spalt, Wolfgang**
**Lembergstrasse 17**
**W-7144 Asperg(DE)**

EP 0 248 230 B1

## Beschreibung

### Stand der Technik

Die Erfindung geht aus von einer Befestigungseinrichtung nach der Gattung des Hauptanspruchs. Bei bekannten Einrichtungen ist der Arbeitskolben am Steuerschieber eines Wegeventils fest angeordnet, z.B. angeklebt oder angeschraubt. Diese Einrichtungen haben aber den Nachteil, daß die Exzentrizität zwischen der Steuerschieberbohrung und der Bohrung des Arbeitskolbens nicht ausgeglichen werden kann. Beide Teile sind dadurch exakt auszubilden, was eine aufwendige und teuere Herstellung bedeutet bzw. höhere Reibung.

In der DE-A 27 25 110 wird eine Verbindungseinrichtung beschrieben, bei der eine Druckstange mit Hilfe eines in einer Ringnut angeordneten Halterings in einem Ventilkegel befestigt ist. Erfindungsgemäß soll dort bei einer relativ festen radialen Anordnung eine Beweglichkeit in axialer Richtung der Druckstange erreicht werden.

Bei der in der DE-U-18 01 483 dargestellten Befestigung wird mit Hilfe eines zweigeteilten Halterings eine in alle Richtungen unbewegliche Fixierung eines Kolbens auf einer Kolbenstange offenbart. Der Haltering wird dabei fest in die Ringnuten eingepreßt und zusätzlich noch mit einem Halteteil fixiert. Diese Befestigung baut sehr aufwendig und ist montageunfreundlich.

In der DE-U 19 44 159 wird mit Hilfe einer Hülse ein Teller auf einem Fortsatz fixiert. Die Hülse weist hierzu einen Fortsatz auf, der in eine im Fortsatz ausgebildete Ringnut eingreift. Aufgrund der hülsenförmigen Ausgestaltung des Halteteils ist kein Ausgleich der Exzentrizitäten der beiden zu verbindenden Teile möglich.

Die Ventilkegelbefestigung nach der DD-A 216 994 wird mit Hilfe von in Ringnuten eingelegten Kugeln hergestellt. Mit Hilfe der Kugeln soll eine Beweglichkeit der Spindel im Kegel erreicht werden, um ein völliges Anliegen des Kegels beim Aufsetzen auf den Ventilsitz zu ermöglichen.

Ferner ist auch bei den in Ringnuten eingreifenden Halteringen nach der DE-A 25 01 190, der USA 4 089 504 oder der FR-A 24 22 847 kein radialer Ausgleich möglich.

### Vorteile der Erfindung

Die erfindungsgemäße Befestigungseinrichtung mit den kennzeichnenden Merkmalen des Hauptanspruchs hat demgegenüber den Vorteil, daß je nach Fertigungsverfahren auftretende Exzentrizitäten zwischen Steuerschieber und Arbeitskolben ausgleichbar sind. Dadurch sind größere Toleranzen bei der Herstellung möglich, die eine relativ kostengünstige Fertigung erlauben. Die Tiefe der Ringnut ist dem gewünschten Radialspiel des Halterings beliebig anpaßbar.

Durch die in den Unteransprüchen aufgeführten Maßnahmen sind vorteilhafte Weiterbildungen und Verbesserungen der im Hauptanspruch angegebenen Merkmale möglich.

### Zeichnung

Ein Ausführungsbeispiel der Erfindung ist in der Zeichnung dargestellt und in der nachfolgenden Beschreibung näher erläutert. Es zeigen Figur 1 einen Längsschnitt durch eine Befestigungseinrichtung und die Figuren 2 und 3 je eine Einzelheit.

### Beschreibung des Ausführungsbeispiels

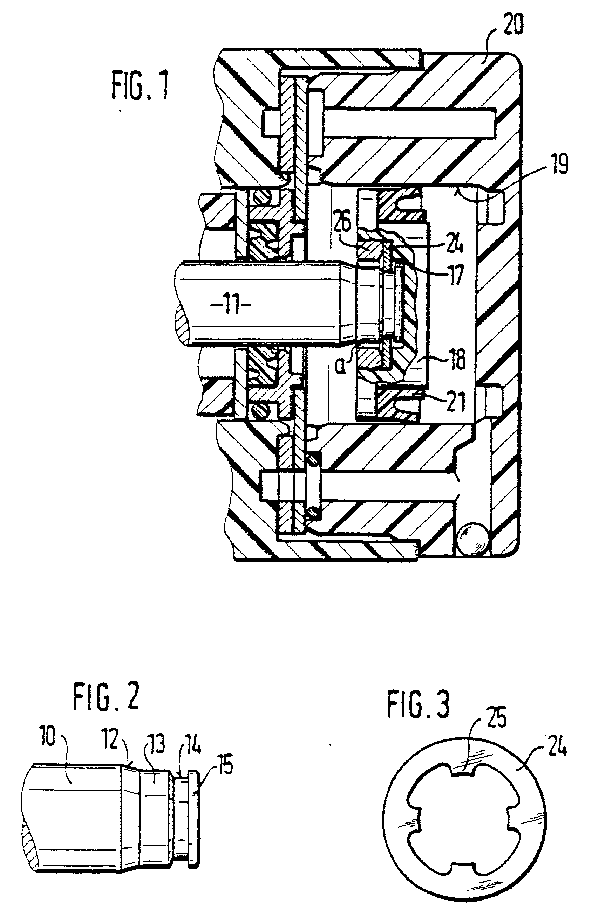

In Figur 1 ist mit 10 das Ende eines Steuerschiebers 11 eines Wegeventils bezeichnet, das, wie in Figur 2 näher dargestellt, einen konischen Abschnitt 12, einen zylindrischen Abschnitt 13, eine Ringnut 14 und einen das Ende 10 abschließenden Steg 15 aufweist. Mit diesem Ende 10 ragt der Steuerschieber 11 in eine abgesetzte Sacklochbohrung 17 eines Arbeitskolbens 18 und liegt mit seiner Stirnseite am Boden der Sacklochbohrung 17 an. Der Arbeitskolben 18 ist gleitend in der Bohrung 19 des Gehäusedeckels 20 des Wegeventils geführt und mit Hilfe eines Dichtrings 21 abgedichtet. In der Ringnut 14 des Steuerschiebers 11 befindet sich ein Haltering 24, dessen Außendurchmesser etwa dem Durchmesser der Sacklochbohrung 17 entspricht, aber noch genügend radiales Spiel aufweist. Ferner liegt der Haltering 24 an der zwischen den beiden Abschnitten der Sacklochbohrung 17 gebildeten Schulter an. Der Innendurchmesser des Halterings 24 entspricht etwa dem Durchmesser der Ringnut 14. Am Innendurchmesser weist der Haltering 24 mehrere Laschen 25 auf, die z.B. im Abstand von 90° zueinander angeordnet sein können. In die Sacklochbohrung 17 ist ferner im Bereich des zylindrischen Abschnittes 13 ein Halteteil 26 eingesetzt, das mit Widerhaken in der Wand der Sacklochbohrung 17 befestigt ist. Die Länge des Halteteils 26 entspricht etwa der Länge des zylindrischen Abschnittes 13. Zwischen dem Abschnitt 13 und dem Halteteil 26 befindet sich ein geringes Spiel "a". Zwischen dem Halteteil 26 und der Schulter der Sacklochbohrung 17 wird somit eine Kammer gebildet, in der der Haltering 24 axial und radial beweglich ist. Dadurch ist es möglich, Exzentrizitäten zwischen Steuerschieber 11 und Arbeitskolben 18, bzw. zwischen der Schieberbohrung und der Bohrung für den Arbeitskolben beliebig auszugleichen.

Zur Befestigung des Steuerschiebers 11 im Arbeitskolben 18 wird der Haltering 24 in die Sacklochbohrung 17 eingesetzt, so daß er an der Schulter der Saklochbohrung 17 anliegt. Anschließend wird das Halteteil 26 in die Sacklochbohrung 17 eingepreßt. Nun wird der Steuerkolben 11 mit Druck in die Sacklochbohrung 17 eingedrückt, bis er mit seiner Stirnseite am Boden der Sacklochbohrung 17 anliegt. Die Laschen 25 des Halterings 24 sind elastisch ausgebildet, so daß sie in die Ringnut 14 des Steuerschiebers 11 einschnappen können. Vorzugsweise ist dazu der Haltering 24 aus elastischem Kunststoff hergestellt. Der Haltering 24 und das Halteteil 26 übertragen keine Kräfte; sie dienen beide nur zur Führung. Der Steuerschieber 11 und der Arbeitskolben 18 stehen in direktem Wirkkontakt, so daß das Halteteil 26 nur so fest in der Sacklochbohrung 17 befestigt sein braucht, um den Haltering 24 festzuhalten. Für den Ausgleich der Exzentrizität zwischen Steuerschieber 11 und Arbeitskolben 18 ist das radiale Spiel des Halterings 24 wichtig.

## Patentansprüche

1. Befestigungseinrichtung für zwei verschiebbare Teile (11, 18), wie Steuerschieber von Wegeventilen und dessen Arbeitskolben, wobei das erste verschiebbare Teil (11) an einem Ende (10) eine Ringnut (14) aufweist, in der ein Haltering (24) eingesetzt ist, und das erste Teil (11) mit seinem Ende (10) in eine Ausnehmung (17) des zweiten Teils (18) ragt, und der Haltering (24) mit Hilfe eines Einsetzteils (26) in der Ausnehmung (17) des zweiten Teils (18) befestigt ist, dadurch gekennzeichnet, daß der Haltering (24) aus elastischem Kunststoff besteht, daß der Durchmesser der Ringnut (14) geringfügig kleiner ist als der Innendurchmesser des Halterings (24), daß die Breite der Ringnut (14) geringfügig gröber ist als die Breite des Halterings (24), und daß sich zwischen dem ersten Teil (11) und dem Einsetzteil (26) ein geringes Spiel (a) befindet.

2. Befestigungseinrichtung nach Anspruch 1, dadurch gekennzeichnet, daß der Haltering (24) am Innendurchmesser mehrere elastische Laschen (25) aufweist.

## Claims

1. Fixing device for two displaceable parts (11, 18) such as the control slide of directional control valves and its working piston, the first displaceable part (11) having at one end (10) an annular groove (14) in which a retaining ring (24) is inserted, and the first part (11) protrudes with its end (10) into a recess (17) of the second part (18) and the retaining ring (24) is fixed in the recess (17) of the second part (18) with the aid of an insertion part (26), characterised in that the retaining ring (24) consists of flexible plastic, in that the diameter of the annular groove (14) is slightly smaller than the inside diameter of the retaining ring (24), in that the width of the annular groove (14) is slightly greater than the width of the retaining ring (24) and in that there is a small clearance (a) between the first part (11) and the insertion part (26).

2. Fixing device according to Claim 1, characterised in that the retaining ring (24) has a plurality of flexible tabs (25) on the inside diameter.

## Revendications

1. Dispositif de fixation pour deux parties coulissantes (11, 18), telles que des tiroirs de commande de distributeurs et leurs pistons moteurs, dispositif dans lequel la première partie coulissante (11) comporte à une extrémité (10) une gorge annulaire (14), dans laquelle est mis en place un anneau de blocage (24), tandis que la première partie (11) pénètre par son extrémité (10) dans un évidement (17) de la seconde partie (18) et que l'anneau de blocage (24) est fixé dans l'évidement (17) de la deuxième partie (18) à l'aide d'une pièce de blocage (26), dispositif de fixation caractérisé en ce que l'anneau de blocage (24) est constitué d'une matière plastique élastique, en ce que le diamètre de la gorge annulaire (14) est légèrement plus petit que le diamètre interne de l'anneau de blocage (24), en ce que la largeur de la gorge annulaire (14) est légèrement plus grande que la largeur de l'anneau de blocage (24), et en ce qu'un léger jeu (a) est ménagé entre la première partie (11) et la pièce de blocage (26).

2. Dispositif de fixation selon la revendication 1, caractérisé en ce que l'anneau de blocage (24) comporte sur son diamètre interne plusieurs languettes élastiques (25).

FIG. 1

FIG. 2

FIG. 3